# EUROPÄISCHE PATENTANMELDUNG

(11) **EP 4 167 160 A1**
(43) Veröffentlichungstag der Anmeldung: **19.04.2023**
(21) Anmeldenummer: 22000228.1
(22) Anmeldetag: 10.10.2022
(51) Int. Cl.: G06Q 10/0833, G06Q 50/28

(54) **VERFAHREN ZUR VERWALTUNG EINES WARENHAUSHALTES, WARENHAUSHALTSVERWALTUNGSSYSTEM, SOWIE COMPUTERPROGRAMMPRODUKT**

(30) Priorität: 12.10.2021 DE 102021005109
(71) Anmelder: Reining, Frank, 40668 Meerbusch (DE)
(72) Erfinder: Reining, Frank, 40668 Meerbusch (DE); Blümle, Sascha, 77855 Achern (DE); Gardeweg, Christopher, 51688 Wipperfürth (DE); Niehoff, Rüdiger, 50935 Köln (DE); Lüdke, Lutz, 79100 Freiburg im Breisgau (DE)

(57) **Zusammenfassung**

Die Erfindung betrifft ein Verfahren zur Verwaltung eines Warenhaushaltes umfassend folgende Verfahrensschritte
a) Bereitstellen eines Warenhaushaltsverwaltungssystems (100)
b) Anfertigen einer Bilddatei (1) wenigstens einer Ware (4, 5, 6) innerhalb eines Lagerortes (7)
c) Analyse der Bilddatei (1) zur Differenzierung wenigstens eines ersten Bildanteils (2) gegenüber einem zweiten Bildanteil (3)
d) Analyse des wenigstens einen ersten Bildanteils (2) zur Identifizierung der wenigstens einen Ware (4,5,6)
e) Bilden eines der wenigstens einen Ware (4, 5, 6) zugeordneten ersten Datensatzanteils (8)
f) Analyse des zweiten Bildanteils (3) zur Zuordnung von mit dem Lagerort (7) verknüpfbaren, eindeutigen Raumkoordinaten (X, Y, Z)
g) Bilden eines dem Lagerort (7) zugeordneten zweiten Datensatzanteils (9)
h) Bilden eines Datensatzes (10), insbesondere Ausgangsdatensatzes (10'), umfassend wenigstens den ersten Datensatzanteil (8) und den zweiten Datensatzanteil (9)
i) Ablage des Datensatzes (10) in einem zur Bildung einer Blockkette (12) geeigneten Block (11), insbesondere Ausgangsblock (11').

Die Erfindung betrifft weiter ein Warenhaushaltsverwaltungssystem und ein Computerprogrammprodukt,

## Beschreibung

Die Erfindung betrifft ein Verfahren zur Verwaltung eines Warenhaushaltes.

Die Erfindung betrifft weiter ein Warenhaushaltsverwaltungssystem.

Ferner betrifft die Erfindung ein Computerprogrammprodukt.

Verfahren zur Verwaltung eines Warenhaushalts sind letztlich so alt wie der Handel oder gar die Haushaltsbildung selbst. Bei deren Betrachtung sind im Wesentlichen die Anforderungen zwischen einem privaten Haushalt und dem Haushalt eines Unternehmens zu unterscheiden.

Auf Grund deren deutlich höher, wirtschaftlicher Bedeutung bezieht sich die Beschreibung hier im Weiteren vorrangig auf Verfahren zur Verwaltung eines Warenhaushalts in betrieblichen Bereichen.

Auch wenn sich dort die Belange von produzierenden Unternehmen recht weitgehend beispielsweise von reinen Handelsunternehmen unterscheiden, basierten derartige Verfahren auch in Mitteleuropa noch bis in die 80er Jahre des vergangenen Jahrhunderts vorrangig auf handgeführten Tabellen in Buch- oder Blattform. Die entsprechend der jeweiligen Anforderungen einer Branche angepassten, oder individuell vom jeweiligen Unternehmen gestalteten Tabellensysteme, wurden dann ab etwa Mitte der Neunzehnhundertachtziger Jahre zur elektronischen Les-und Schreibbarkeit in Computerprogramme (Software) übertragen. Bereits aus der Mitte des vorigen Jahrhunderts bekannte Lochkartensysteme waren dagegen lediglich elektronisch lesbar und mussten noch mechanisch geschrieben ("gelocht") werden.

Die softwarebasierte Warenhaushaltsführung bot mit diesen ersten Programmen dabei zwar Vorteile insbesondere hinsichtlich ihrer Speicherbarkeit und der vereinfachten Korrigierbarkeit, der Möglichkeit eines einfachen Kopierens sowie nach Einführung von Netzwerksystemen auch der Möglichkeit der Lesbarkeit derselben Datei, bzw. desselben Dateistandes von verschiedenen Endgeräten aus, bot darüber hinaus aber kaum Möglichkeiten gegenüber den traditionellen, handgeführten Tabellensystemen.

Managementstrategien wie das "just-in-time-production"-Prinzip und selbstverständlich die Auswirkungen der zunehmenden Globalislerung haben seit dem in immer rasanterem Tempo die Anforderungen an moderne Warenhaushaltsverwaltungssysteme und Verfahren zur Verwaltung eines Warenhaushaltes gesteigert.

Aus diesen Anforderungen sind moderne Warenhaushaltsverwaltungssysteme und Verfahren zur Verwaltung eines Warenhaushaltes entstanden. Wohl am bekanntesten dürften dabei die ERP-Systeme sein, die der Industrie oder allgemein den betrieblichen Bereichen, heute bereits in sich in immer kürzeren Zeitzyklen ablösenden Generation zur Verfügung stehen.

Nachteilig bei derartigen Systemen und Verfahren bleibt jedoch der geringe Grad der erzielbaren Datenintegrität der Waren, insbesondere Artikel und Lagerkomponenten, in Bezug auf deren physikalischen Verfügbarkeit und/oder des verwalteten beziehungsweise des zu verwaltenden Lagerorts.

So müssen nach belastbaren Erhebungen nach aktuellem Stand der Technik branchenübergreifend etwa 25% der Gesamtkosten eines zu verhandelnden Produktes, also einer Ware, den im Bereich der Logistik entstehenden Kosten zugeschreiben werden.

Zudem stellen moderne Warenhaushaltsverwaltungssysteme und Verfahren zur Verwaltung eines Warenhaushaltes hohe Ausbildungsvoraussetzungen und sind wegen ihres hohen Eingabeteils und der zunehmenden Unübersichtlichkeit im Umgang und der hohen Anzahl von Schnittstellen zudem recht fehleranfällig.

Demnach kann eine Aufgabe der Erfindung darin gesehen werden, ein Verfahren zur Verwaltung eines Warenhaushaltes und ein Warenhaushaltsverwaltungssystem bereit zustellen, das den Gesamtkostenanteil des Logistikbereichs an einem zu verhandelnden Produkt, also einer Ware, verringert.

Alternativ oder ergänzend kann eine andere Aufgabe der Erfindung darin gesehen werden, ein Verfahren zur Verwaltung eines Warenhaushaltes und ein Warenhaushaltsverwaltungssystem bereit zustellen, das im Umgang die notwendigen Schnittstellen minimiert oder wenigstens besonders gering hält.

Alternativ oder ergänzend kann eine andere Aufgabe der Erfindung darin gesehen werden, ein Verfahren zur Verwaltung eines Warenhaushaltes und ein Warenhaushaltsverwaltungssystem bereit zustellen, das eine einfache Bedienung ermöglicht.

Alternativ oder ergänzend kann eine andere Aufgabe der Erfindung darin gesehen werden, ein Verfahren zur Verwaltung eines Warenhaushaltes und ein Warenhaushaltsverwaltungssystem bereit zustellen, das insgesamt eine geringe Fehleranfälligkeit aufweist.

Wenigstens eine der Erfindung zu Grunde liegende Aufgabe wird bei einem Verfahren zur Verwaltung eines Warenhaushaltes dadurch gelöst, dass das Verfahren folgende Verfahrensschritte umfasst:
a) Bereitstellen eines Warenhaushaltsverwaltungssystems
b) Anfertigen einer Bilddatei wenigstens einer Ware innerhalb eines Lagerortes
c) Analyse der Bilddatei zur Differenzierung wenigstens eines ersten Bildanteils gegenüber einem zweiten Bildanteil
d) Analyse des wenigstens einen ersten Bildanteils zur Identifizierung der wenigstens einen Ware
e) Bilden eines der wenigstens einen Ware zugeordneten ersten Datensatzanteils
f) Analyse des zweiten Bildanteils zur Zuordnung von mit dem Lagerort verknüpfbaren, eindeutigen Raumkoordinaten
g) Bilden eines dem Lagerort zugeordneten zweiten Datensatzanteits
h) Bilden eines Ausgangsdatensatzes umfassend wenigstens den ersten Datensatzanteil und den zweiten Datensatzanteil
i) Ablage des Datensatzes in einem zur Bildung einer Blockkette geeigneten Ausgangsblock.

Ein so definiertes Verfahren ermöglicht eine eindeutige Identifizierung der Ware, insbesondere eines Artikels oder einer Lagerkomponente, und unter Hinzuziehung von, insbesondere gleichzeitig, erhobenen Raumkoordinaten auch eine eindeutige Verknüpfung der identifizierten Ware hinsichtlich ihrer tatsächlichen, physikalischen Verfügbarkeit und ihres tatsächlichen Lagerorts. Das Verfahren bietet so einen extrem hohen Grad an Datenintegrität die bevorzugt entsprechend eines (fortlaufenden) Zeitwertes rückverfolgbar an sich einstellende Anpassungen und/oder Änderungen, insbesondere des Zustandes der Ware und/oder des Lagerorts angepasst und fortgeschrieben werden kann. Dabei ist das Verfahren frei von der Notwendigkeit der Verwendung einer zentralen Datenverwaltungsstruktur. Das Verfahren ist im Gegenteil dazu fähig, die durch die, vorzugsweise unter Nutzung eines mobilen Datenerfassungsgeräts von einem Bediener oder einer Einrichtung vorzunehmenden, Anfertigung einer Bilddatei und deren Analyse eine eindeutige Identifizierung der Ware unter Hinzuziehung von gleichzeitig erhobenen Raumkoordinaten und ohne Verwendung einer zentralen Datenverwaltungsstruktur zu verarbeiten, auszuwerten und dadurch einen erheblichen Mehrwert für den Abwicklungsprozess innerhalb eines Verfahrens zur Verwaltung eines Warenhaushaltes zu schaffen, welcher zu signifikanten Einsparungen im Aufwand für das Handling der Waren beiträgt.

Im Sinne der vorliegenden Schrift ist unter einem Lagerort jeder Ort zu verstehen, an dem sich die zu betrachtende beziehungsweise die zu verwaltende Ware zu einem bestimmten Zeitrang tatsächlich befindet. Der Lagerort kann also durch einen Lagerplatz in einem Warenlager, einen Lagerplatz innerhalb oder auf einem Transportmittel, einem Ort innerhalb einer Vorrichtung oder einer Anlage zur Bearbeitung der Ware und so weiter gebildet sein.

In Schritt e) wird vorzugsweise ein digitaler Zwilling der Ware (in ihrem augenblicklichen Zustand) angefertigt. Der digitale Zwilling kann sich bei weiterer Durchführung von Verfahrensschritten und/oder beim erneuten Durchlaufen von Verfahrensschritten in seinen Eigenschaften dokumentiert anpassen.

Es ist von Vorteil, wenn das Verfahren folgende zusätzliche Verfahrensschritte umfassent:
j} Bilden wenigstens eines Folgeblocks, wobei der Folgeblock einen Folgedatensatz aufweist, der einen ersten Folgedatensatzanteil und einen zweiten Folgedatensatzanteil aufweist und wobei der erste Folgedatensatzanteil wenigstens Teile des ersten Datensatzanteils und der zweite Folgedatensatzanteil wenigstens Teile des zweiten Datensatzanteils aufweist.
k) Verbinden des Blocks, insbesondere Ausgangsblocks und des wenigstens einen Folgeblocks . zu einer Blockkette unter Verwendung eines, wenigstens ein Verbindungsmerkmal aufweisenden, Verbindungsprinzips.

Dies erhöht die Praxistauglichkeit und macht das Verfahren im betrieblichen Alltag ganz besonders wertvoll. Auch lassen sich auf diese Weise die mit dem Verfahren verbundenen Kosteneinsparungspotentiale besonders gut ausschöpfen. Der Grad der Dateiintegrität ist - bezogen auf die Betrachtung eines Gesamtprozesses, etwa einer Warenhaushaltsverwaltung innerhalb eines produktiv und/oder kommerziell handelnden Unternehmens - auf diese Weise ebenfalls steigerbar, was zusätzlich unter anderem positiven Einfluss auf die bereits genannten Vorteile hat und insbesondere zur erheblichen Senkung der Logistikkosten beitragen kann.

Das Nachsuchen einmal erfasster Waren erübrigt sich durch ein so fortgebildetes Verfahren praktisch vollständig.

Weiter ist es von Vorteil, wenn die im Verfahrensschritt j) vorgenommene Bildung des wenigstens einen Folgeblocks unter Durchführung der Verfahrensschritte a) bis i) erfolgt, wobei der Folgeblock zu einem Ausgangsblock für einen möglichen weiteren Folgeblock wird.

Es ist demzufolge bevorzugt, dass die Schritte a) bis i) bei Durchführung eines Verfahrens zur Verwaltung eines Warenhaushaltes, wenigstens einmal, insbesondere mehrfach wiederholt werden.

Dabei ist ganz besonders bevorzugt, dass die Schritte a) bis i) blockartig wiederholt abgearbeitet werden. Auch kann eine schleifenartige, wiederholte Abarbeitung bevorzugt sein. Bei der Verwendung eines weiter unten beschriebenen Computerprogramms, insbesondere zur Erzeugung eines Computerprogrammprodukts kann es deshalb bevorzugt sein, dass das Computerprogramm eine blockartige und/oder schleifenartige Abarbeitung der Verfahrensschritte a) bis i) vorsieht, vorzugsweise als die Feststellung der erfolgten Anfertigung einer entsprechenden Bilddatei die Schritte b) bis i) automatisch tigert.

Dies macht die Durchführung des Verfahrens in sich besonders schlüssig und trägt zur Erreichung eines stabilen und sicheren Verfahrensergebnisses bei. Zudem erhöht auch eine derartige Ausbildung die Praxistauglichkeit und macht das Verfahren im betrieblichen Alltag ganz besonders wertvoll. Auch lassen sich auf diese Weise die mit dem Verfahren verbundenen Kosteneinsparungspotentiale besonders gut ausschöpfen. Der Grad der Dateiintegrität ist - bezogen auf die Betrachtung eines Gesamtprozesses, etwa einer Warenhaushaltsverwaltung innerhalb eines produktiv und/oder kommerziell handelnden Unternehmens - auf diese Weise ebenfalls steigerbar, was zusätzlich unter anderem positiven Einfluss auf die bereits genannten Vorteile hat und insbesondere zur erheblichen Senkung der Logistikkosten beitragen kann.

Weiter kann es von Vorteil sein, wenn zu der in Verfahrensschritt b) vorgenommenen Anfertigung der Bilddatei Informationen zu einer erstellenden Person oder Einrichtung erfasst werden und diese Informationen vorzugsweise als dritter Datensatzanteil oder Teil des zweiten Datensatzanteils in den, im Verfahrensschritt i) abzulegenden, Datensatz eingehen.

Dies erhöht die Nachvollziehbarkeit der Daten und macht das Verfahren in seiner Handhabung noch einmal übersichtlicher. Zudem trägt es der Gesamtsicherheit des erzielbaren Verfahrensergebnisses bei und erspart unter anderem eine separate Dokumentation, wodurch abermals der Grad der erzielbaren Datenintegrität erhöht ist.

Weiter kann es bevorzugt sein, dass die in Verfahrensschritt d) vorgenommene Analyse unter Zuhilfenahme von eines Bildanalyseprogramms vorgenommen wird.

So kann sichergestellt werden, dass verlässliche Analyseergebnisse erzielt werden. Zudem ist so ein hoher Grad an Verlässlichkeit dauerhaft verfügbar. Auch trägt dies zur Kostenoptimierung bei. Nicht zuletzt, sind die der jeweiligen Analyse(n) zu Grunde liegenden Rahmenbedingungen so jederzeit nachvollziehbar und können Informationen darüber (wenigsten zum Sachstand des Bildanalyseprogramms) ebenfalls in Datenform einem Block, insbesondere dem Ausgangsblock und/oder dem wenigstens einen Folgeblock beispielsweise als Bestandteil des ersten Datensatzanteils zugeordnet werden.

Auch kann es von Vorteil sein, wenn wenigstens einem der Verfahrensschritte a) bis i) ein Zeitstempel zugeordnet wird.

Ein solcher Zeitstempel ist dabei vorzugsweise an der fortlaufenden Echtzeitmessung orientiert und spiegelt diese besonders bevorzugt sogar unmittelbar wieder. Der Zeitstempel erhöht somit abermals den Grad der Datenintegrität und ordnet einzelne Ereignisse und Verfahrensschritte in eine chronologische Abfolge. Somit erhöht das Vorsehen eines Zeitstempels auch die Nachvollziehbarkeit des erreichten Verfahrensstandes und bildet damit eine wichtige Grundlage zur sicheren Ausbildung eines fehlerfreien Datensatzes eines (Folge-)Blocks.

Unter Berücksichtigung der genannten Vorteile ist es nachvollziehbar, dass es von großem Vorteil ist, wenn wenigstens einem Verfahrensschritt j), insbesondere j1) bis jn), ein Zeitstempel zugeordnet wird.

Dabei ist es selbstverständlich bevorzugt, dass jedem Verfahrensschritt j), insbesondere j1) bis jn) ein Zeitstempel zugeordnet wird.

Verfahrensökonomisch kann es in Ausnahmefällen davon abweichend jedoch auch sinnvoll sein, lediglich einem bestimmten Prozentsatz, etwa wenigstens 20%, 50, 75%,80%, 90% oder wenigstens 99% der Verfahrensschritt j), insbesondere j1) bis jn), ein Zeitstempel zuzuordnen.

Dazu kann dann beispielsweise ein Verfahrensschritt j), der frei von einer Zuordnung eines Zeitstempels ausgebildet wird, (z.B. für den Folgeprozess, also einem ihm zeitlich nachgeordneten Verfahrensschritt i), j) oder k)) gesondert gekennzeichnet werden.

Von großem Vorteil ist es zudem, wenn wenigstens einem Verfahrensschritt j), insbesondere j1) bis jn), ein kryptographisch sicherer Hash, insbesondere ein Streuwert eines vorhergehenden Blocks insbesondere Ausgangsblocks und/oder Folgeblocks, und/oder Transaktionsdaten, insbesondere mit einem Zeitstempel zugeordnet werden.

Dies trägt zur Sicherheit der Verknüpfung und der Sicherstellung einer fehlerfreien Rückverfolgbarkeit bei. Somit wird eine entstehende Blockkette besonders wertvoll und sicher in ihrer Anwendung. Zudem tragen diese Merkmale wesentlich zur Verfügungstellung einer sicheren Grundlage für die Anlage einer dezentralen Organisation einer, beispielsweise innerhalb eines Warenhaushaltsverwaltungssystems vorgesehenen Verarbeitungseinheit, insbesondere Datenverarbeitungseinheit, bei.

Aus ähnlichem Anlass ist es alternativ oder zudem bevorzugt, dass Verfahrensschritt i) und/oder j) und/oder k) unter Zurhilfenahme eines kryptografischen Verfahrens durchgeführt wird.

Dies macht es sogar möglich, das Verfahren auch bei Verwaltung einer Vielzahl von Waren mit jeweils wenigstens teilweise unterschiedlichem Sachstand und unterschiedlichem Zeitstempel ihres jeweils gebildeten Ausgangsblocks und bei Bestehen einer bereits eine Mehrzahl von Blöcken aufweisendem Sachstand die Organisation der Datenverwaltung (zu einem zukünftigen Zeitpunkt) zu modernisieren.

Es ist demnach allgemein bei einem hier beschriebenen Verfahren bevorzugt, und sicher selbstverständlich, dass das Verfahren zur Verwaltung eines Warenhaushaltes genutzt wird, der aus einer Vielzahl von unterschiedlichen und gleichartigen Waren besteht und dessen Bestand in sich temporär abhängig qualitativ und/oder quantitativ Änderungen erfährt, wobei fallweise auch einzelne Waren Anpassungen ihrer Eigenschaften, etwa ihrer physikalischen und/oder chemischen Eigenschaften, erfahren.

Im Einzelnen kann so beispielsweise bei Anwendung des Verfahrens zur Verwaltung eines verderbliche Ware, z.B. Lebensmittel umfassenden Warenhaushalts auch Information über deren Haltbarkeit Bestandteil eines Datensatzteils sein.

Auch kann bei Anwendung des Verfahrens zur Verwaltung einer sich innerhalb eines Herstellungs- und/oder Bearbeitungsprozess ändernden Ware oder eines sich ändernden Warenanteils sein.

Beispielsweise kann in eine Ware in einem Block in Form eines Kunststoffgranulats erfasst sein und nach Durchlaufen eines Kunststoffspritzvorgangs in Form eines Kunststoffspritzgussteils erfasst werden, um später als solches Bestanteil einer in einem anderen (Folge-)Block erfassten Vorrichtung zu werden. Dabei können mit jedem Block erfasste Daten beispielsweise über Lagerbedingungen, Prozessbedingungen innerhalb einer Bearbeitungsstation, hier einer Einrichtung zur Durchführung des genannten Kunststoffspritzvorgangs, festgestellte Qualitätsmerkmale und viele andere Daten erfasst und mit einem jeweiligen Zeitstempel verknüpft werden. Durch die Blockbildung und das Verknüpfungsschema kann jeder (in der Vergangenheit abgespeicherte) Sachstand sicher und vorzugsweise dezentral nachverfolgt werden.

So ist es also von besonderem Vorzug, wenn zwischen oder während der Durchführung wenigstens eines Verfahrensschrittes j), insbesondere j1) bis jn) eine Einflussnahme auf eine physikalische und/oder eine chemische Eigenschaft der Ware vorgenommen wird.

Auch kann es von Vorteil sein, wenn das Verfahren mit einem Verfahren zur Herstellung und/oder Bearbeitung einer Ware verknüpft ist und das Verfahren zur Herstellung und/oder Bearbeitung einer Ware wenigstens einen erste Verfahrensparameter und einen zweiten Verfahrensparameter aufweist und wenigstens ein Verfahrensparameter unter Zurhilfenahme eines neuronalen Netzwerks geregelt wird.

Auf diese Weise kann erreicht werden, dass nicht nur die Sicherheit der Verwaltung eines Warenhaushalts steigt und der Aufwand dabei gleichzeitig erheblich verringert wird, sondern auch, dass sich durch Wegfall unnötig starrer Vorgaben in einem Herstellungs- und/oder Bearbeitungsprozess an sich, Symbiosen durch die Verknüpfung derartiger Verfahren ergeben.

Insbesondere ermöglicht ein vorliegendes Verfahren zu Verwaltung eines Warenhaushalts bei Anwendung und/oder Verknüpfung auf ein Verfahren zur Herstellung und/oder Bearbeitung einer Ware wenigstens einen erste Verfahrensparameter und einen zweiten Verfahrensparameter aufweist und wenigstens ein Verfahrensparameter unter Zurhilfenahme eines neuronalen Netzwerks geregelt wird, deren uneingeschränkte Fortbildungsmöglichkeit und trägt so nicht nur erheblich zu einer Erhöhung der Eigenlernfähigkeit bei, sondern bietet zusätzlich eine sichere Identifizierbarkeit von Fehlern um so abermals auch der Eigenlernfähigkeit beizutragen.

Die Erfindung wird nachstehend an Hand eines einzigen Ausführungsbeispiels im Zusammenhang mit einer Zeichnung beschrieben.

In der Zeichnung zeigt:

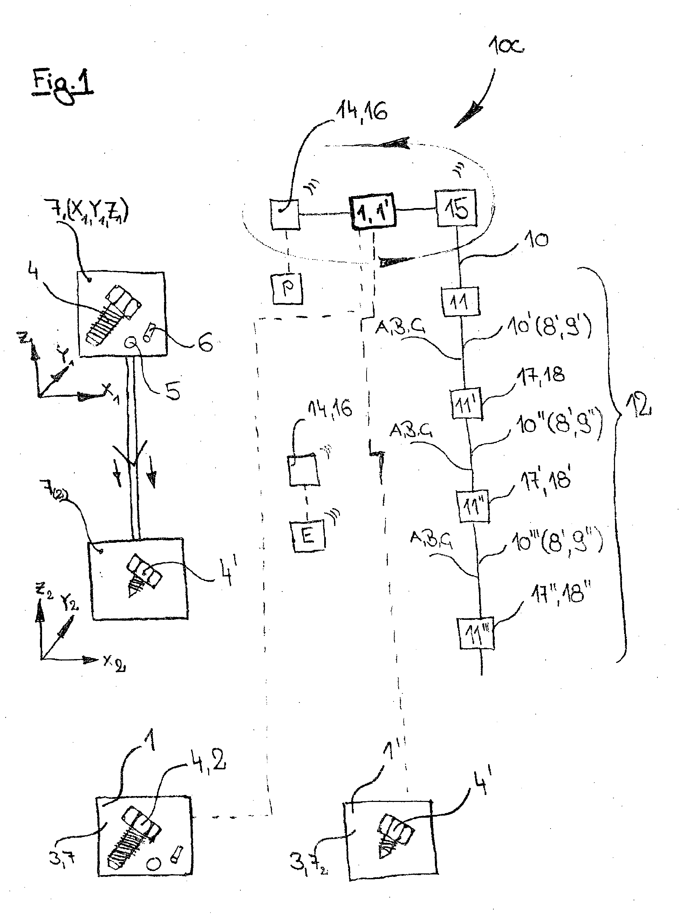

- Figur 1:: Eine schemenhafte Darstellung eines bevorzugten Ausführungsbeispiels des beschriebenen Verfahrens unter Anwendung eines Warenhaushaltsverwaltungssystems und der Erzielung eines Computerprogrammprodukts.

Figur 1 zeigt schematisch Ablauf und ein (Teil-)Ergebnis eines Verfahrens zur Verwaltung eines Warenhaushaltes umfassend folgende Verfahrensschritte
a) Bereitstellen eines Warenhaushaltsverwaltungssystems 100
b) Anfertigen einer Bilddatei 1 wenigstens einer Ware 4, 5, 6 innerhalb eines Lagerortes 7
c) Analyse der Bilddatei 1 zur Differenzierung wenigstens eines ersten Bildanteils 2 gegenüber einem zweiten Bildanteil 3
d) Analyse des wenigstens einen ersten Bildanteils 2 zur Identifizierung der wenigstens einen Ware 4, 5, 6
e) Bilden eines der wenigstens einen Ware 4, 5, 6 zugeordneten ersten Datensatzanteils (8)
f) Analyse des zweiten Bildanteils 3 zur Zuordnung von mit dem Lagerort 7 verknüpfbaren, eindeutigen Raumkoordinaten X, Y, Z
g) Bilden eines dem Lagerort 7 zugeordneten zweiten Datensatzanteils 9
h) Bilden eines Datensatzes 10, insbesondere Ausgangsdatensatzes 10', umfassend wenigstens den ersten Datensatzanteil 8 und den zweiten Datensatzanteil 9
i) Ablage des Datensatzes 10 in einem zur Bildung einer Blockkette 12 geeigneten Block 11, insbesondere Ausgangsblock 11'.

Dabei bezieht sich der schematisch dargestellte Ablauf und das dargestellte (Teil-)Ergebnis auf eine Computerprogramm unterstützte Durchführung des Verfahrens zur Verwaltung eines Warenhaushalts, sodass das dargestellte (Teil-)Ergebnis in seinem letzten, im Bildbereich weiter rechts dargestellten Folgeblocks 11ʹʹʹ auch gleichzeitig ein Computerprogrammprodukt darstellt.

Dabei umfasst das in Verfahrensschritt a) zur Verfügung gestellte Warenhaushaltsverwaltungssystems 100, ein Datenerfassungsgerät 14 und eine Verarbeitungseinheit 15, von denen wenigstens eins ein Bildanalyseprogramm 16 aufweist oder mit einem Bildanalyseprogramm in Wirkverbindung steht. Dabei kann das Warenhaushaltsverwaltungssystems 100 dezentral organisiert sein, sodass beispielsweise das Datenerfassungsgerät 14 als mobiles Gerät ausgebildet sein kann. Dabei kann es sich beispielsweise um eine Digitalkamera handeln, die beispielsweise zur drahtlosen Datenübertragung ausgebildet sein kann. Beispielsweise kann diese Bestandteil eines Mobiltelefons, eines so genannten Smartphones oder eines vergleichbaren Geräts sein. Das Warenhaushaltsverwaltungssystems 100 kann selbstverständlich mehrerer Datenerfassungsgeräte 14 aufweisen und/oder mit diesen in Wirkverbindung stehen. Mit einem solchen Datenerfassungsgerät 14 kann beispielsweise eine Person P ausgerüstet sein und eine Ware 4 an einem lagerort 7 erfassen. Auch ist es denkbar, dass eine Ware 5 und eine Ware 6 nach der Erfassung der Ware 4 oder gemeinsam mit der Erfassung der Ware 4 erfasst werden. Der Einfachheit halber bezieht sich die weitere Figurenbeschreibung im Wesentlichen um die logistische Erfassung und Verfolgung der Ware 4. Dazu wird eine Analyse der Bilddatei 1 zur Differenzierung wenigstens eines ersten Bildanteils 2 gegenüber einem zweiten Bildanteil 3 durchgeführt. Eine Analyse des wenigstens einen ersten Bildanteils 2 zur Identifizierung der wenigstens einen Ware 4 erfolgt. Es wird ein, der wenigstens einen Ware 4 zugeordneter, erster Datensatzanteils 8 gebildet.

Ferner erfolgt eine Analyse des zweiten Bildanteils 3 zur Zuordnung von mit dem Lagerort 7 verknüpfbaren, eindeutigen Raumkoordinaten X, Y, Z. Dazu folgt die Bildung eines dem Lagerort 7 zugeordneten zweiten Datensatzanteils 9.

Es wird ein Datensatzes 10, insbesondere Ausgangsdatensatzes 10', gebildet, der wenigstens den ersten Datensatzanteil 8 und den zweiten Datensatzanteil 9 umfasst. Der Datensatzes 10 wird in einem zur Bildung einer Blockkette 12 geeigneten Block 11, insbesondere Ausgangsblock 11' abgelegt.

Das dargestellte, bevorzugte Ausführungsbeispiel zeigt, dass in weiteren Verfahrensschritten j) die Bildung wenigstens eines Folgeblocks 11", 11ʹʹʹ, 11ʺʺ durchgeführt wird, wobei der Folgeblock 11",11ʹʹʹ, 11ʺʺ einen Folgedatensatz 10", 10ʹʹʹ, 10ʺʺ aufweist, der einen ersten Folgedatensatzanteil 8, 8', 8", 8ʹʹʹ und einen zweiten Folgedatensatzanteil 9', 9", 9ʹʹʹ aufweist und wobei der erste Folgedatensatzanteil 8,ʹ8ʺ,8ʹʹʹ wenigstens Teile des ersten Datensatzanteils 8 und der zweite Folgedatensatzanteil 9', 9", 9ʹʹʹ wenigstens Teile des zweiten Datensatzanteils 9 aufweist.

Dabei wird in einem weiteren Verfahrensschritt k) die Verbindung des Blocks, insbesondere Ausgangsblocks 11 und des wenigstens einen Folgeblocks 11", 11ʹʹʹ, 11ʺʺ zu einer Blockkette 12 unter Verwendung eines, wenigstens ein Verbindungsmerkmal A, B, C aufweisenden, Verbindungsprinzips, vorgenommen.

Die im Verfahrensschritt j) vorgenommene Bildung des wenigstens einen Folgeblocks 11", 11ʹʹʹ, 11ʺʺ erfolgt dabei unter Durchführung der Verfahrensschritte a) bis i), wobei der Folgeblock 11ʺ,11ʹʹʹ, 11ʺʺ zu einem Ausgangsblock 11, 11ʺ,11ʹʹʹ, 11ʺʺ für einen möglichen weiteren Folgeblock 11", 11ʹʹʹ, 11ʺʺ wird.

Zu der in Verfahrensschritt b) vorgenommenen Anfertigung der Bilddatei 1 werden darüberhinaus Informationen I zu der erstellenden Person P erfasst, wobei diese Informationen I vorzugsweise als dritter Datensatzanteil 13 oder in nicht dargestellter Form als Teil des zweiten Datensatzanteils 9 in den, im Verfahrensschritt i) abzulegenden, Datensatz 10, 10", 10ʹʹʹ, 10ʺʺ eingehen.

In Zusammenhang mit der Durchführung eines anderen (Wiederholungs-)Vorgangs der Durchführung der Verfahrensschritte a) bis i) wird die Bilddatei 1 nicht von einer Person P sondern von einer Einrichtung E angefertigt. Zur Kennzeichnung der mehrfachen Wiederholung der Verfahrensschritte a) bis i) ist symbolisch im oberen Bildbereich ein Areal mit einem Wiederhohfungskreis dargestellt, auch wenn sich einzelne Parameter darin entsprechend des Wiedrholungsgrades und der angepassten Situation der physisch vorhandenen Ware anpassen. Dazu finden beispielhaft die Bilddateien 1 und 1'in den Wiederholungskreis Eingang.

In beiden Fällen wird die in Verfahrensschritt d) vorgenommene Analyse unter Zuhilfenahme von eines Bildanalyseprogramms 16 vorgenommen.

Bei Durchführung des Verfahrens wird wenigstens einem der Verfahrensschritte a) bis i) ein Zeitstempel T, T', T",Tʹʹʹ zugeordnet. Zudem wird wenigstens einem Verfahrensschritt j), insbesondere j1) bis jn), ein Zeitstempel T, T', T",Tʹʹʹ zugeordnet.

Zudem wird wenigstens einem Verfahrensschritt j), insbesondere j1) bis jn), ein kryptographisch sicherer Hash 17, insbesondere ein Streuwert eines vorhergehenden Blocks 11, 11",11ʹʹʹ, 11ʺʺ, insbesondere Ausgangsblocks und/oder Folgeblocks, und/oder Transaktionsdaten 18, insbesondere mit einem Zeitstempel T, T', T",Tʹʹʹ zugeordnet.

Auch wird Verfahrensschritt i) unter Zurhilfenahme eines kryptografischen Verfahrens durchgeführt wird.

Erkennbar ist zudem, dass zwischen oder während der Durchführung wenigstens eines Verfahrensschrittes j), insbesondere j1) bis jn) eine Einflussnahme auf eine physikalische und/oder eine chemische Eigenschaft der Ware 4, vorgenommen wird, die in Folge dessen als Ware 4' mit entsprechend geänderten physikalischen und/oder chemischen Eigenschaften in der Figur dargestellt ist.

Dabei ist es denkbar, dass das Verfahren mit einem Verfahren zur Herstellung und/oder Bearbeitung einer Ware verknüpft ist und das Verfahren zur Herstellung und/oder Bearbeitung einer Ware wenigstens einen erste Verfahrensparameter und einen zweiten Verfahrensparameter aufweist und wenigstens ein Verfahrensparameter unter Zurhilfenahme eines neuronalen Netzwerks geregelt wird, wobei beispielsweise die Eigenschaftsanpassung der Ware 4 zur Ware 4'durch ein solches Verfahren zur Herstellung und/oder Bearbeitung einer Ware vorgenommen wird. In der Figur ist dazu eine Änderung der als Schraube dargestellte Ware 4 durch Kürzung ihres Gewindeteils und Anspitzung ihres Fußbereichs zur Ware 4'dargestellt, wobei die vorgenommene physische Bearbeitung durch den Doppelpfeil dargestellt ist und sich die Ware 4'an einem anderen Lagerort 7₍₂₎ befindet. Die Bilddatei l'gibt die zugehörigen und zu analysierenden Daten der angepassten Ware und ihres angepassten Lagerorts wieder.

Die Erfindung ist durch das dargestellte bevorzugte Ausführungsbeispiel nicht abschließend beschrieben, vielmehr ergibt sich der Erfindungsgedanke aus dem gesamten Offenbarungsgehalt des vorliegenden Schriftsatzes.

So sind beispielsweise die dargestellten Einrichtungen 14, 16 und E über kabellose Verbindungen, wie WLAN, fernverbunden.

### Bezugszeichenliste

- 1: Bilddatei
- 2: Erster Bildanteil
- 3: Zweiter Bildanteil
- 4: Ware (und apostrophiert dessen Ableitungen, Computerprogrammprodukt)
- 5: Ware (und apostrophiert dessen Ableitungen, Computerprogrammprodukt)
- 6: Ware (und apostrophiert dessen Ableitungen, Computerprogrammprodukt)
- 7: Lagerort
- 8: Erster Datensatzanteil (und apostrophiert dessen Ableitungen)
- 9: Zweiter Datensatzanteil (und apostrophiert dessen Ableitungen)
- 10: Datensatz (und apostrophiert dessen Ableitungen)
- 11: Block, Ausgangsblock, Folgeblock (und apostrophiert dessen Ableitungen)
- 12: Blockkette
- 13: Dritter Datensatzanteil (und apostrophiert dessen Ableitungen)
- 14: Datenerfassungsgerät
- 15: Verarbeitungseinheit
- 16: Bitdanalyseprogramm
- 17: Hash, insbesondere Streuwert (und apostrophiert dessen Ableitungen)
- 18: Transaktionsdaten (und apostrophiert dessen Ableitungen)

- 100: Warenhaushaltsverwaltungssystem
- A: Verbindungsmerkmal
- B: Verbindungsmerkmal
- C: Verbindungsmerkmal

- E: Einrichtung
- P: Person, Bediener

- T: Zeitstempel (und apostrophiert dessen Ableitungen)

- X: Raumkoordinate
- Y: Raumkoordinate
- Z: Raumkoordinate

## Patentansprüche

1. Verfahren zur Verwaltung eines Warenhaushaltes umfassend folgende Verfahrensschritte
a) Bereitstellen eines Warenhaushaltsverwaltungssystems (100)
b) Anfertigen einer Bilddatei (1) wenigstens einer Ware (4, 5, 6) innerhalb eines Lagerortes (7)
c) Analyse der Bilddatei (1) zur Differenzierung wenigstens eines ersten Bildanteils (2) gegenüber einem zweiten Bildanteil (3)
d) Analyse des wenigstens einen ersten Bildanteils (2) zur Identifizierung der wenigstens einen Ware (4,5,6)
e) Bilden eines der wenigstens einen Ware (4, 5, 6) zugeordneten ersten Datensatzanteils (8)
f) Analyse des zweiten Bildanteils (3) zur Zuordnung von mit dem Lagerort (7) verknüpfbaren, eindeutigen Raumkoordinaten (X, Y, Z)
g) Bilden eines dem Lagerort (7) zugeordneten zweiten Datensatzanteils (9)
h) Bilden eines Datensatzes (10), insbesondere Ausgangsdatensatzes (10'), umfassend wenigstens den ersten Datensatzanteil (8) und den zweiten Datensatzanteil (9)
i) Ablage des Datensatzes (10) in einem zur Bildung einer Blockkette (12) geeigneten Block (11), insbesondere Ausgangsblock (11').

2. Verfahren nach Anspruch 1,
umfassend folgende zusätzliche Verfahrensschritte
j) Bilden wenigstens eines Folgeblocks (11",11ʹʹʹ, 11""), wobei der Folgeblock (11",11ʹʹʹ, 11ʺʺ) einen Folgedatensatz (10", 10ʹʹʹ, 10ʺʺ) aufweist, der einen ersten Folgedatensatzanteil (8, 8', 8", 8ʹʹʹ) und einen zweiten Folgedatensatzanteil (9', 9", 9ʹʹʹ) aufweist und wobei der erste Folgedatensatzanteil (8,'8",8ʹʹʹ) wenigstens Teile des ersten Datensatzanteils (8) und der zweite Folgedatensatzanteil (9', 9", 9ʹʹʹ) wenigstens Teile des zweiten Datensatzanteils (9) aufweist.
k) Verbinden des Blocks, insbesondere Ausgangsblocks (11) und des wenigstens einen Folgeblocks (11",11ʹʹʹ, 11"") zu einer Blockkette (12) unter Verwendung eines, wenigstens ein Verbindungsmerkmal (A, B, C) aufweisenden, Verbindungsprinzips.

3. Verfahren nach Anspruch 2,
**dadurch gekennzeichnet, dass**
die im Verfahrensschritt j) vorgenommene Bildung des wenigstens einen Folgeblocks (11",11ʹʹʹ, 11ʺʺ) unter Durchführung der Verfahrensschritte a) bis i) erfolgt, wobei der Folgeblock (11",11ʹʹʹ, 11ʺʺ) zu einem Ausgangsblock (11, 11",11ʹʹʹ, 11"") für einen möglichen weiteren Folgeblock (11",11ʹʹʹ, 11"") wird.

4. Verfahren nach einem der vorhergehenden Ansprüche,
**dadurch gekennzeichnet, dass**
zu der in Verfahrensschritt b) vorgenommenen Anfertigung der Bilddatei (1) Informationen (I) zu einer erstellenden Person (P) oder Einrichtung (E) erfasst werden und diese Informationen (I) vorzugsweise als dritter Datensatzanteil (13) oder Teil des zweiten Datensatzanteils (9) in den, im Verfahrensschritt i) abzulegenden, Datensatz (10, 10", 10ʹʹʹ, 10ʺʺ) eingehen,

5. Verfahren nach einem der vorhergehenden Ansprüche,
**dadurch gekennzeichnet, dass**
das die in Verfahrensschritt d) vorgenommene Analyse unter Zuhilfenahme von eines Bildanalyseprogramms (16) vorgenommen wird.

6. Verfahren nach einem der vorhergehenden Ansprüche,
**dadurch gekennzeichnet, dass**
wenigstens einem der Verfahrensschritte a) bis i) ein Zeitstempel (T, T', T",Tʹʹʹ) zugeordnet wird.

7. Verfahren nach einem der Ansprüche 2 bis 6,
**dadurch gekennzeichnet, dass**
wenigstens einem Verfahrensschritt j), insbesondere j1) bis jn), ein Zeitstempel (T,T',T",Tʹʹʹ) zugeordnet wird.

8. Verfahren nach einem der Ansprüche 2 bis 7,
**dadurch gekennzeichnet, dass**
wenigstens einem Verfahrensschritt j), insbesondere j1) bis jn), ein kryptographisch sicherer Hash (17), insbesondere ein Streuwert eines vorhergehenden Blocks (11, 11",11ʹʹʹ, 11""), insbesondere Ausgangsblocks und/oder Folgeblocks, und/oder Transaktionsdaten (18), insbesondere mit einem Zeitstempel (T, T', T",Tʹʹʹ) zugeordnet werden.

9. Verfahren nach einem der vorhergehenden Ansprüche,
**dadurch gekennzeichnet, dass**
Verfahrensschritt i) unter Zurhilfenahme eines kryptografischen Verfahrens durchgeführt wird.

10. Verfahren nach einem der vorhergehenden Ansprüche,
**dadurch gekennzeichnet, dass**
zwischen oder während der Durchführung wenigstens eines Verfahrensschrittes j), insbesondere j1) bis jn) eine Einflussnahme auf eine physikalische und/oder eine chemische Eigenschaft der Ware (4, 5, 6) vorgenommen wird.

11. Verfahren nach einem der vorhergehenden Ansprüche,
**dadurch gekennzeichnet, dass**
das Verfahren mit einem Verfahren zur Herstellung und/oder Bearbeitung einer Ware verknüpft ist und das Verfahren zur Herstellung und/oder Bearbeitung einer Ware wenigstens einen erste Verfahrensparameter und einen zweiten Verfahrensparameter aufweist und wenigstens ein Verfahrensparameter unter Zurhilfenahme eines neuronalen Netzwerks geregelt wird.

12. Warenhaushaltsverwaltungssystem (100) umfassend,
wenigstens ein Datenerfassungsgerät (14), geeignet zur Anfertigung einer Bilddatei (1) wenigstens einer Ware (4,5,6) innerhalb eines Lagerortes (7), wenigstens eine Verarbeitungseinheit (15), die wenigstens zur Analyse der Bilddatei (1) zur Differenzierung wenigstens eines ersten Bildanteils (2) gegenüber einem zweiten Bildanteil (3) geeignet ist, wobei die Analyse des wenigstens einen ersten Bildanteils (2) zur Identifizierung der wenigstens einen Ware (4,5,6) und zur Bildung eines der wenigstens einen Ware (4, 5, 6) zugeordneten ersten Datensatzanteils (8) geeignet ist, und die ferner wenigstens zur Analyse des zweiten Bildanteils (3) zur Zuordnung von mit dem Lagerort (7) verknüpfbaren, eindeutigen Raumkoordinaten (X, Y, Z) und zur Bildung eines dem Lagerort (7) zugeordneten zweiten Datensatzanteils (9) geeignet ist,
und die weiter zur Bildung eines Datensatzes (10), insbesondere Ausgangsdatensatzes (10'), umfassend wenigstens den ersten Datensatzanteil (8) und den zweiten Datensatzanteil (9) Ablage des Datensatzes (10) in einem zur Bildung einer Blockkette (12) geeigneten Block (11), insbesondere Ausgangsblock (11') ausgebildet ist.

13. Warenhaushaltsverwaltungssystem (100) nach dem vorhergehenden Anspruch,
**dadurch gekennzeichnet, dass**
das Warenhaushaltsverwaltungssystem (100) zur Durchführung eines Verfahrens gemäß einem der Ansprüche 1 bis 11 ausgebildet ist.

14. Warenhaushaltsverwaltungsprogramm (100) nach einem der beiden vorhergehenden Ansprüche,
**dadurch gekennzeichnet, dass**
. die Verarbeitungseinheit (15) dezentral ausgebildet ist.

15. Warenhaushaltsverwaltungssystem (100) nach einem der Ansprüche 12 bis 14,
**dadurch gekennzeichnet, dass**
unter Zuhilfenahme des Warenhaushaltsverwaltungssystems (100) ein Computerprogrammprodukt erzeugbar ist und vorzugsweise erzeugt wird.

16. Computerprogrammprodukt (4', 5',6')
bestehend aus einer Ware (4, 5, 6) die unter Zurhilfenahme eines computerprogrammbasierten Verfahrens und/oder eines computerbasierten Warenhaushaltssystems (100) hergestellt und/oder bearbeitet ist, wobei das computerprogrammbasierte Verfahren zur computerprogrammbasierten Durchführung wenigstens folgender Schritte ausgelegt ist:
- Anfertigen einer Bilddatei (1) wenigstens einer Ware (4,5,6) innerhalb eines Lagerortes (7)
- Analyse der Bilddatei (1) zur Differenzierung wenigstens eines ersten Bildanteils (2) gegenüber einem zweiten Bildanteil (3)
- Analyse des wenigstens einen ersten Bildanteils (2) zur Identifizierung der wenigstens einen Ware (4, 5, 6)
- Bilden eines der wenigstens einen Ware (4, 5, 6) zugeordneten ersten Datensatzanteils (8)
- Analyse des zweiten Bildanteils (3) zur Zuordnung von mit dem Lagerort (7) verknüpfbaren, eindeutigen Raumkoordinaten (X, Y, Z)
- Bilden eines dem Lagerort (7) zugeordneten zweiten Datensatzanteils (9)
- Bilden eines Datensatzes (10), insbesondere Ausgangsdatensatzes (10'), umfassend wenigstens den ersten Datensatzanteil (8) und den zweiten Datensatzanteil (9)
- Ablage des Datensatzes (10) in einem zur Bildung einer Blockkette (12) geeigneten Block (11), insbesondere Ausgangsblock (11').

17. Computerprogrammprodukt (4', 5',6'),
**dadurch gekennzeichnet, dass**
die Ware (4, 5, 6) unter Zurhilfenahme eines computerprogrammbasierten Verfahrens das entsprechend einem Verfahren gemäß einem der Ansprüche 1 bis 11 fortgebildet ist, und/oder unter Anwendung eines computerbasierten Warenhaushaltsverwaltungssystems (100), das entsprechend einem Warenhaushaltsverwaltungssystem (100), das nach einem der Ansprüche 12 bis 16 weitergebildet ist, hergestellt und/oder bearbeitet ist.
